## Europäisches Patentamt

## European Patent Office

## Office européen des brevets

(11) Publication number: **0 266 486**
**B1**

(12) **EUROPEAN PATENT SPECIFICATION**

(45) Date of publication of the patent specification:
16.08.90

(51) Int. Cl.⁵: **F16L 27/08**, F16L 27/00

(21) Application number: **87108287.1**

(22) Date of filing: **09.06.87**

(54) Mobile joint for connectors.

(30) Priority: **03.11.86  IT 2357386 U**

(43) Date of publication of application:
**11.05.88 Bulletin 88/19**

(45) Publication of the grant of the patent:
**16.08.90 Bulletin 90/33**

(84) Designated Contracting States:
**AT BE CH DE ES FR GB GR LI LU NL SE**

(56) References cited:
**AT-B- 227 043**
**AT-B- 359 790**
**DE-A- 3 536 924**

(73) Proprietor: **MURRAY EUROPE S.p.A., Via A. Volta, 17,
I-20090 Cusago(Milano)(IT)**

(72) Inventor: **Dalla Bona, Alfredo, Vicolo Bezzecca 14/16,
I-20081 Abbiategrasso (Milano)(IT)**
Inventor: **Airaghi, Attilio, Via E. Mattei 21/D,
I-20010 Cornaredo (Milano)(IT)**

(74) Representative: **Lecce, Giovanni, Dott. Giovanni Lecce
& C. S.r.l. Via G. Negri 10, I-20123 Milano(IT)**

ACTORUM AG

## Description

This invention relates to a mobile joint for connectors. To be more precise, this invention concerns a mobile joint for connectors, which may be used for conveyor ducts for fluids, especially for those at low pressure.

As is known, in industry in general, and especially in the car industry, very often use is made of connectors with joints of the so-called 'eye' sort to connect conveyor ducts for fluids in general, and in particular, for those subject to low working pressures. Though the above mentioned connectors are on the most part satisfactory in as much as they serve their purpose adequately, nonetheless, they have certain drawbacks. In particular, due to the fact that the jointing seal is ensured by two flattened washers of annealed copper, a high torque setting must be applied to obtain a perfect seal.

Another drawback derives from the fact that the so-called eye-joints are composed of various parts or pieces separated one from the other, such as a joint, bolt and washers, which must be assembled with care and kept in perfect alignment one with the other during closing. To obtain this result the assemblers must pay great attention, consequently the whole operation takes quite a long time.

AT-B-227 043 discloses a mobile joint in which all the constituent parts are inter-connected and are self-centered during working conditions. This reference discloses a mobile joint comprising a hollow bolt, provided with a central duct and including an upper faceted head and a lower threaded shank, and an elbow main body comprising the two tubes. One of the two tubes is inserted into the central duct of the hollow bolt and is rotatably constrained within said duct by flanging or riveting its free end. An annular gasket, inserted into an annular hollow space formed in the upper part of the bolt head and limited by the reinforced conjunction of the tube, ensures the seal between the connected parts. The mobile joint disclosed in the above mentioned reference solves the problem of the alignment of the various constituent parts but still presents some drawbacks limiting its use, especially in the car industry.

The present invention solves the drawbacks of the above mobile joint by a new method for rotatably constraining the tube of the main body within the duct of the bolt.

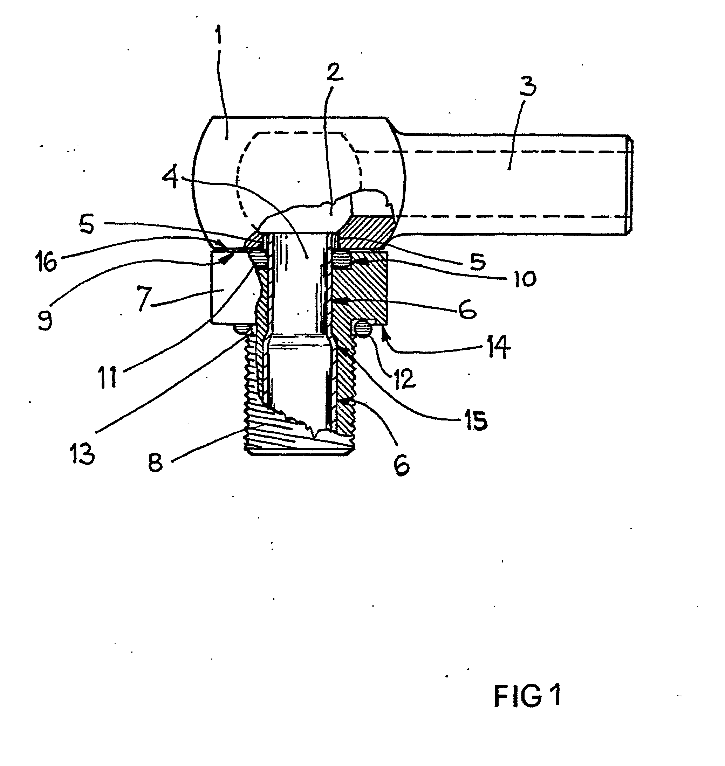

In the present invention, a mobile joint for connecting ducts is provided in which all the constituent parts are interconnected and selfcentered, the joint being particularly suitable for being used in the car industry, and comprising a hollow bolt including an upper faceted head and a lower threaded shank and provided with a central duct, and a main body provided with an inner compartment and with two tubes, converging into said compartment one of the tubes being an integral part of the central body, the joint being assembled by a method consisting in inserting a said tube into the central duct of the hollow bolt, inserting annular elastic gaskets at opposite sides of the bolt head, and rotatably contraining the tube inside the central duct, the other tube being fixed to said central body, and one said annular elastic gasket is inserted between the outer surface of the bolt head and the adjacent surface of the main body and the tube is rotatably constrained inside a widened outer part of the central duct by die drawing part of the tube to produce an enlargement having the same widened shape as the outer aprt of the central duct; whereby the annular elastic gasket is compressed against said adjacent surface of the main body when the head corner into contact with the main body.

In order that the elastic annular gaskets may be perfectly positioned, the bolt is provided with an upper annular compartment and a lower annular groove, in the two free surfaces of its faceted head. When drawing the tube in the central duct of the bolt, the elastic annular gasket, placed in the upper annular compartment, is compressed and placed in a condition to ensure the seal between the annular seat, the upper surface of the bolt head and the lower plane of the central body. In the joint referred to in this invention, the tube, fixed to the central body and inserted in the hollow bolt, may rotate in the bolt's central duct but remains constrained to it due to the enlargement drawing ; the elastic annular gasket, placed between said central body and the hollow bolt, ensures a perfect seal.

The advantages obtained by adopting the mobile joint referred to in this invention mainly consist in the fact that application of the connector joint no longer requires the use of a high torque setting ; the self-centering and pre-assembling of the various parts comprising the joint facilitates the assembly operation and greatly reduces the tim it takes to apply them; the seal between the various parts is guaranteed by the malleability, flexibility, adhesion and adaptability of the material which the annular gaskets are made of, said material being preferably elastomer.

In order to have a clearer picture of the constructive and functional characteristics of this invention, following is a description with reference to the enclosed drawing which represents a schematic view of the cross-section of an embodiment of the mobile joint for connectors of the present invention.

With reference to the drawing, the mobile joint for connectors comprises a main body 1 provided with an inner compartment 2 into which converge two tubes 3 and 4. The two tubes 3 and 4 are preferably arranged in such a way that their lengthwise axes are at a right angle. A tube 3 forms an integral part of the main body 1. The tube 4 is made up of a tubular body which is rigidly constrained to the main body 1, for example by means of a soldering around its circumference 5. The extension of the tube 4 is inserted into a central duct 6 of a bolt composed of an upper faceted head 7 and a lower threaded shank 8. On the upper surface 9 of the head 7 is machined an annular chamber 10 in which is inserted an annular gasket 11. A second annular gasket 12 is placed in the groove made on the shank 8 of the bolt, between the lower surface 14 of the head 7 and the threaded part 8.

The tube 4, inside the central duct 6 of the bolt is free to rotate, but at the same time is constrained to it due to an enlargement drawing 15 which has the same widened shape as the lower part of the central duct 6. In this manner, the tube 4, though it may rotate around its axis, still remains constrained to the bolt and cannot be extracted. Moreover, when assembling the tube 4 in the central duct 6, i.e. during drawing of the free end of the tube 4, the gasket 11 is compressed between its seat 10, the and the lower plane 16 of the main body, making a perfect seal, constraining the bolt to the tube 4.

The annular gaskets 11 and 12 are preferably, but not restrictively, of the circular section type and are made of flexible, elastic material, such as, for example, elastomer.

The enclosed description and drawing make it clear that all the components of the mobile joint referred to in this invention are pre-assembled all together and, for their installation, it is sufficient to screw the threaded shank 8 in the corresponding threaded hold from which it originates, or into which must be sent the fluid to be conveyed.

During the screwing process, all the components remain in their exact position of alignment and in the end the gasket 12 is also pressed between its groove 10, the lower surface 14 of the head 7 and the plane, not shown, to which the joint is constrained. Closing, at the base of the bolt, with a normal tightening load, completes the assembly and guarantees the perfect seal of the joint.

## Claims

1. A method of assemblying a mobile joint for connecting fluid ducts comprising a hollow bolt including an upper faceted head (7) and a lower threaded shank (8) and provided with a central duct (6), and a main body (1) provided with an inner compartment (2) and with two tubes (3, 4) converging into said compartment (2) one of the tubes being an integral part of said central body; said method consisting in:
   – inserting a said tube (4) into the central duct (6) of the hollow bolt,
   – inserting annular elastic gaskets (11, 12) at the opposite sides of the bolt head, and
   – rotatably constraining the tube (4) inside the central duct (6);
   characterized in that the other tube (4) is fixed to said central body, and one said annular elastic gasket (11) is inserted between the outer surface (9) of the bolt head (7) and the adjacent surface (16) of the main body (1) and the tube (4) is rotatably constrained inside a widened outer part of the central duct (6) by die drawing part of the tube (4) to produce an enlargement (15) having the same widened shape as the outer part of the central duct (6); whereby the annular elastic gasket (11) is compressed against said adjacent surface (16) of the main body (1) when the head (7) comes into contact with the main body.

2. Method according to claim 1, characterized in that said annular elastic gasket (11) is inserted into an annular seat (10) machined in the outer surface (9) of the bolt head (7) and, during the die drawing of the part of tube (4), it is compressed and sealed between said seat (10), and the lower surface (16) of the main body (1).

3. Method according to claim 1 or 2, characterized in that the two tubes (3, 4) of the main body have their lengthwise axes at right angles.

4. A method according to anyone of the preceding claims, characterized in that the tube (4) inserted into the central duct (6) of the hollow bolt is rigidly constrained to the main body (1) by soldering around its circumference (5).

5. A method according to anyone of the preceding claims, characterized in that the second elastic annular gasket (12) is inserted into a groove (13) machined on the shank (8) of the bolt and the lower surface (14) of the bolt head (7) adjacent the threaded part (8) of the bolt.

6. A method according to anyone of the preceding claims, characterized in that the elastic annular gaskets (11, 12) have a circular section and are made of plastic material.

7. A method according to anyone of the preceding claims, characterized in that the main body (1), the tubes (3, 4) to be connected, the bolt including head (7) and threaded shank (8) and the sealing gaskets (11, 12) are preassembled together in the exact working position, the lower gasket (12) remaining in its position in the groove (13) between the lower surface (14) of the head (7) and the threaded shank (8) of the bolt.

## Patentansprüche

1. Methode der Montage einer beweglichen Kupplung für die Verbindung von Flüssigkeitsleitungen, die einen hohlen Bolzen enthält, der einen oberen, facettierten Kopf (7) und einen unteren Gewindeschaft (8) aufweist und mit einem inneren Leitkanal (6), und einem Hauptkörper (1) versehen ist, der mit einem Innenbereich (2) und mit zwei Rohren (3, 4) ausgerüstet ist, die in besagtem Bereich zusammenlaufen (2), und von denen eines ein wesentlicher Bestandteil des besagten mittleren Körpers ist; diese Montagemethode besteht besteht aus folgendem:
   – Einsetzen eines besagten Rohrs (4) in den Mittel-Leitkanal (6) des hohlen Bolzens;
   – Einsetzen der Federringdichtungen (11, 12) an den beiden gegenüberliegenden Seiten des Bolzenkopfs, und
   – Drücken des Rohrs (4) durch Drehung in den mittleren Leitkanal (6) hinein, gekennzeichnet dadurch, dass das andere Rohr (4) am besagten Mittelkörper befestigt ist, und die besagte Federringdichtung (11) zwischen die äussere Oberfläche (9) des Bolzenkopfs (7) und die angrenzende Fläche (16) des Hauptkörpers eingesetzt wird (1) und das Rohr (4) durch Drehung in den erweiterten äusseren Teil des mittleren Leitkanals (6) gedrückt wird, und zwar durch Ziehen eines Teils des Rohrs (4), bis eine Verbreiterung entsteht (15), die die gleiche erweiterte Form aufweist wie der äussere Teil des mittleren Leitkanals (6), wobei die Federringdichtung (11) gegen besagte angrenzende Fläche (16) des Hauptkörpers (1) gepresst wird, wenn der Kopf (7) mit dem Hauptkörper in Berührung kommt.

2. Methode nach Anspruch 1, die dadurch gekennzeichnet ist, dass die besagte Federringdichtung (11) in einen ringförmigen Sitz (10) eingesetzt wird, der in die äussere Oberfläche des Bolzenkopfs (7) eingearbeitet wurde, und während des Ziehens eines Teils des Rohrs (4) zwischen besagten Sitz (10) und die untere Fläche (16) des Hauptkörpers (1) gepresst und dicht versiegelt wird.

3. Methode nach Anspruch 1 oder 2, gekennzeichnet dadurch, dass die beiden Rohre (3, 4) des Hauptkörpers ihre Längsachsen im rechten Winkel haben.

4. Methode nach einem beliebigen der vorausgegangenen Ansprüche, gekennzeichnet dadurch, dass das Rohr (4), das in den mittleren Leitkanal (6) des hohlen Bolzens eingesetzt wird, steif mit dem Hauptkörper (1) verbunden ist, und zwar durch Schweissen rund um seine Kreislinie (5).

5. Methode nach einem beliebigen der vorausgangenen Ansprüche, gekennzeichnet dadurch, dass die zweite Federringdichtung (12) in eine maschinell in den Schaft (8) des Bolzens und die untere Fläche (14) des Bolzenkopfs (7), die an den Gewindeteil (8) des Bolzens angrenzt, eingearbeitete Nute eingesetzt wird.

6. Methode nach einem beliebigen der vorausgangenen Ansprüche, gekennzeichnet dadurch, dass die Federringdichtungen (11, 12) einen kreisförmigen Schnitt haben und aus Kunststoffmaterial bestehen.

7. Methode nach einem beliebigen der vorausgangen Ansprüche, gekennzeichnet dadurch, dass der Hauptkörper (1), die Rohre (3, 4), die verbunden werden sollen, der Bolzen einschliesslich Kopf (7) und Gewindeschaft (8) und die Dichtungen (11, 12) in der genauen Arbeitsstellung vormontiert werden, wobei die untere Dichtung (12) in ihrer Lage in der Nute (13) zwischen der unteren Fläche (14) des Kopfs (7) und dem Gewindschaft (8) des Bolzens bleibt.

## Revendications

1. Une méthode d'assemblage d'un joint mobile pour le raccordement d'un tuyau hydraulique comprenant un boulon creux comprenant une tête supérieure facetté (7) et une queue inférieure filetée (8) et dotée d'un tuyau central (6), et d'un corps principal (1) doté d'une section intérieure (2) et de deux tubes (3, 4) qui convergent dans ladite section (2) un des tubes étant une partie intégrale du susdit corps central; ladite méthode consistant dans:

    — l'introduction du susdit tube (4) dans le tuyau central (6) du boulon creux,

    — l'introduction de garnitures annulaires élastiques (11, 12) aux côtés opposés de la tête de boulon, et

    — la liaison en alternance du tube (4) dans le tuyau central (6); caractérisée par le fait que l'autre tube (4) est fixé au susdit corps central, et une des susdites garnitures annulaires élastiques (11) est introduite entre la surface extérieure (9) de la tête de boulon (7) et la surface adjacente (16) du corps principal (1) et le tube (4) est obligé en alternance dans une partie extérieure élargie du tuyau central (6) en emboutissant une partie du tube (4) pour produire un élargissement (15) ayant la même forme élargie de la partie extérieure du tuyau central (6); où la garniture annulaire élastique (11) est comprimée contre ladite surface adjacente (16) du corps principal (1) quand la tête (7) entre en contact avec le corps principal.

2. Méthode d'après la revendication 1, caractérisée par le fait que ladite garniture annulaire élastique (11) est introduite dans un siège annulaire (10) travaillé dans la surface extérieure (9) de la tête de boulon (7) et, pendant l'emboutissage de la partie du tube (4), elle est comprimée et scellée entre ledit siège (10), et la surface inférieure (16) du corps principal (1).

3. Méthode d'après la revendication 1 ou 2, caractérisée par le fait que les deux tubes (3, 4) du corps principal ont leurs axes longitudinaux à des angles droits.

4. Une méthode d'après n'importe quelle des revendications précédentes, caractérisée par le fait que le tube (4) introduit dans le tuyau central (6) du boulon creux est lié de manière rigide au corps principal (1) par soudage autour de sa circonférence (5).

5. Une méthode d'après n'importe quelle des revendications précédentes, caractérisée par le fait que la seconde garniture annulaire élastique (12) est introduite dans une rainure (13) travaillée sur la queue (8) du boulon et la surface inférieure (14) de la tête de boulon (7) adjacente la partie filetée (8) du boulon.

6. Une méthode d'après n'importe quelle des revendications précédentes, caractérisée par le fait que les garnitures annulaires élastiques (11, 12) ont une section circulaire et sont faites en matière plastique.

7. Une méthode d'après n'importe quelle des revendications précédentes, caractérisée par le fait que le corps principal (1), les tubes (3, 4) à être raccordés, le boulon comprenant la tête (7) et la queue filetée (8) et les garnitures de fermeture (11, 12) sont préassemblés ensemble sur la position de travail exacte, la garniture inférieure (12) restant sur sa position dans la rainure (13) entre la surface inférieure (14) de la tête (7) et la queue filetée (8) du boulon.

FIG 1